# EUROPÄISCHE PATENTSCHRIFT

(11) **EP 1 844 995 B1**
(45) Veröffentlichungstag und Bekanntmachung des Hinweises auf die Patenterteilung: **02.05.2012**
(21) Anmeldenummer: 07102136.4
(22) Anmeldetag: 12.02.2007
(51) Int. Cl.: B60S 1/40, B60S 1/38

(54) **Scheibenwischer**
Windscreen wiper
Essuie-glace

(30) Priorität: 10.04.2006 DE 102006016809
(43) Veröffentlichungstag der Anmeldung: 17.10.2007
(73) Patentinhaber: ROBERT BOSCH GMBH, 70442 Stuttgart (DE)
(72) Erfinder: Wilms, Christian, B-3582, Koersel-Beringen (BE); Grammens, Joris, B-3350, Linter (BE); Vangeel, Tom, B- 3000, Leuven (BE)

(56) Entgegenhaltungen:
- EP-A2- 1 024 067
- WO-A1-02/060730
- DE-A1- 4 436 604
- DE-A1- 10 259 636
- DE-A1-102005 036 443
- US-A1- 2004 006 840

## Beschreibung

### Stand der Technik

Die Erfindung betrifft einen Scheibenwischer für Kraftfahrzeuge gemäß dem Oberbegriff des Anspruches 1.

Aus der DE 37 44 237 A1 ist ein Scheibenwischer mit einem Wischarm bekannt, der über ein quer zur Scheibe verlaufendes Drehgelenk mit einem pendelnd angetriebenen Befestigungsteil verbunden ist. Mit dem freien Ende des Wischarms ist ein Wischblatt gelenkig verbunden, welches aus einer Wischleiste und einem Wischleistenträger aufgebaut ist. Bei dem bekannten Scheibenwischer umfasst der Wischleistenträger ein Tragbügelsystem mit einem Mittelbügel und zwei in Längsrichtung der Wischleiste beabstandeten Krallenbügeln, die die Wischleiste halten. Durch die gelenkige Verbindung der Bügel untereinander kann sich die Wischleiste während der Schwenkbewegung einer Wölbung der Fahrzeugscheibe anpassen. Um die Führung des Wischblattes und damit Verschleißerscheinungen, einer Geräuschentwicklung und einem schlechten Wischbild entgegenzuwirken, ist zwischen dem seitlich mit Abstand neben dem Wischarm verlaufenden Abschnitt des Wischblattes und dem Wischarm ein Führungselement vorgesehen, welches mit mindestens einer Führungsfläche das Wischblatt im Bereich einer Anlenkstelle eines antriebsseitigen Krallenbügels mit Abstand zu den Enden des Wischblattes führt. Nachteil bei der bekannten Lösung ist, dass der Teilabschnitt des Wischblattes zwischen dem Anlagebereich der Führungsfläche und dem freien Ende des Wischblattes weiterhin zu Schwingungen neigt, was zu einem erhöhten Verschleiß, einer Geräuschentwicklung und einem nicht optimalen Wischbild führt.

Bei dem aus der DE 197 31 683 A1 bekannten Scheibenwischer ist das Führungselement zweiteilig ausgebildet, wodurch Abstandsänderungen zwischen der Scheibe und dem Wischarm besser ausgeglichen werden können, wodurch wiederum die Gefahr einer Kollision mit der Scheibe reduziert wird. Nachteilig bei dem bekannten Scheibenwischer ist ebenfalls, dass der Bereich zwischen freiem Ende des Wischblattes und dem Anlagebereich des Führungselementes an dem Wischarm zu Schwingungen neigt.

Aus der DE 102 18 033 A1 ist ein Scheibenwischer mit einem Wischarm bekannt, dessen Wischleisten Träger im unbelasteten Zustand eine Krümmung aufweist, die so ausgelegt ist, dass sich ein gleichmäßiger Anpressdruck ergibt, wenn sich im Betrieb des Wischblattes die Wischleiste vollständig an die Fahrzeugscheibe anlegt. Auf ein Tragbügelsystem kann bei einer derartigen Anordnung verzichtet werden. An den Stirnseiten des Wischblattes sind Endkappen aus Kunststoff montiert. An einer Endkappe sind Führungsrippen angeordnet, die von einem mit dem Wischarm verbundenen Führungsbügel geführt werden. Dabei ist das Wischblatt unmittelbar unterhalb des Wischarms angeordnet und ragt in senkrechter Richtung in das Wischblattprofil hinein. Hierdurch ist es notwendig, das Wischarmprofil speziell an das Wischblatt anzupassen. Außerdem ist die Montage des Wischblattes mühsam, da das Wischblatt in das Profil des Wischarms eingeführt werden muss.

Aus der DE 44 36 604 A1 ist ein Scheibenwischer für Fahrzeuge mit quer versetzt zum Wischarm liegendem Wischblatt und im längsmittleren Bereich des Wischblattes endseitig zum Wischarm vorgesehener Tragverbindung zwischen Wischarm und Wischblatt bekannt. Die Tragverbindung erfolgt über eine in Richtung des Querversatzes zwischen Wischarm und Wischblatt verlaufende Schwenkachse. Das Wischblatt ist zusätzlich an seinem inneren Ende über eine Führungsanordnung mit dem Wischarm beweglich verbunden. Die Führungsanordnung ist analog zur Tragverbindung schwenkbeweglich und weist ein Führungselement auf, das mit einer flächigen Führungsanlage für einen endseitig zum Wischblatt vorgesehenen Anlagebereich versehen ist.

Ein Scheibenwischer gemäß der US 2004/0006840 A1 ist bei in einer quer zur Wischebene liegenden Schwenkebene gegeneinander schwenkbeweglichen Anordnung von in Überdeckung zueinander liegendem Wischarm und Wischblatt am inneren Ende des Wischblattes mit einer Endkappe versehen. Diese Endkappe ist über eine insbesondere längs- und quernachgiebige, sich in Längsrichtung des Wischblattes erstreckende Wellfederverbindung, am Wischarm abgestützt, wobei die Wellfederverbindung über ein Endstück in einer am Wischarm vorgesehenen U-förmigen Führungsaufnahme gehalten ist.

Eine Scheibenwischvorrichtung gemäß der DE 102 59 636 A1 mit Querversatz von Wischarm und Wischblatt in Richtung der Wischebene sieht ergänzend eine schwenkbewegliche Abstützung zwischen Wischblatt und Wischarm quer zur Wischebene im gegen das innere Ende des Wischblattes auslaufenden Bereich vor. Die Abstützung umfasst über einen verschwenkbaren Federbügel verbundene, separate Anschlussteile zum Wischblatt und Wischarm. Der Federbügel ist als einstückiger Drahtbügel ausgebildet, dessen parallel verlaufende Schenkel einerseits über gegeneinander eingebogene Endstücke am wischarmseitigen Anschlussteil angelenkt sind und anderenends U-förmig zurückgebogen über einen Steg verbunden sind. Der Steg ist in eine in Richtung der Schenkel längsgestreckte Aufnahme am wischblattseitigen Anschlussteil verrastend eingehängt und in dieser Aufnahme längsverschieblich geführt, wobei die Schenkel des Drahtbügels sich längs Anlageflächen des wischblattseitigen Anschlussteiles geführt erstrecken.

Mit der nicht vorveröffentlichten DE 10 2005 036 443 A1 wurde ferner für einen Scheibenwischer eine Vorrichtung zur Führung dessen Wischblattes vorgeschlagen, bei der das Wischblatt an seinem inneren Ende mit einer Endkappe versehen und mit dem in Richtung der Wischebene seitlich versetzt liegenden Wischarm über eine Dämpfungseinrichtung führend verbunden ist. Die Dämpfungseinrichtung umfasst einen in Längsrichtung des Wischblattes von der Endkappe auskragenden, zylindrischen Führungsstift, der in eine quer hierzu verlaufende ovale Führungsöffnung eines elastisch am Führungsarm abgestützten Führungskörpers eingreift und in der Führungsöffnung reibend geführt ist.

### Offenbarung der Erfindung

### Technische Aufgabe

Der Erfindung liegt die Aufgabe zugrunde, einen verbesserten Wischarm vorzuschlagen, dessen Wischblatt einfach zu montieren ist und bei dem das Wischblatt im Hinblick auf ein optimales Wischbild möglichst schwingungsfrei geführt ist.

### Technische Lösung

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, das abschnittsweise seitlich neben dem Wischarm verlaufende Wischblatt an seinem freien Ende mit einem Führungselement zu führen. Bevorzugt weist das Wischblatt mindestens eine Endkappe auf, die als Anlagebereich zur Anlage des Führungselementes dient. Die Endkappe schließt das Wischblatt seitlich ab. Die Endkappe kann als separates Bauteil aber auch einstückig mit dem Wischblattträger, insbesondere mit einem Spoiler des Wischblattträgers, ausgebildet sein. Durch die Führung im Endbereich des Wischblattes, insbesondere an mindestens einer Endkappe, werden mögliche Schwingungen des Wischblattes im Wischbetrieb vermieden. Da die quer zur Längsrichtung des Wischblatts wirkenden Reibkräfte bei einer Schwenkbewegung des Wischblatts vom inneren Radius zum äußeren Radius hin stetig abnehmen, ist es von Vorteil, zumindest das in Richtung Wischerantrieb weisende Ende des Wischblatts mittels eines Führungselementes zu führen. Durch die abschnittsweise seitliche Anordnung des Wischblatts neben dem Wischarm wird zusätzlich erreicht, dass sich das Wischblatt und insbesondere das Führungselement einfach montieren lassen.

Das Führungselement ist bevorzugt als Einzelteil aus Kunststoff ausgebildet, welches an dem Wischarm montierbar ist. Mit Vorteil lässt sich das Führungselement von außen auf den Wischarm aufklippsen, so dass auch bei herkömmlichen Scheibenwischern ein Führungselement zur Führung des Wischblattes an seinem freien Ende nachgerüstet werden kann. Bevorzugt ist das Führungselement auf das Außenprofil des Wischarms aufklippsbar.

In Ausgestaltung der Erfindung ist vorgesehen, dass das Führungselement Relativbewegungen zwischen dem Wischblatt und dem Wischarm zulässt und sich zusammen mit dem Wischblatt zumindest über eine begrenzte Strecke mitbewegen kann. Hierdurch können Kollisionen des Führungselementes mit der Scheibe selbst dann vermieden werden, wenn der erfindungsgemäße Scheibenwischer für Scheiben mit sehr unterschiedlichen Krümmungsradien verwendet wird.

Zur Gewährleistung dieser Flexibilität des Führungselementes ist vorgesehen, dass das Führungselement senkrecht zur Scheibe und/oder in Richtung Wischarm federnd ausgebildet ist. Durch die federnde Ausbildung können auch Stöße aufgrund einer plötzlichen Wischgeschwindigkeitsänderung oder aufgrund einer bereichsweise trockenen Scheibe abgefangen werden.

Zusätzlich oder alternativ ist es möglich, dass das Führungselement mindestens zwei um eine Schwenkachse gegeneinander verschwenkbare Teilabschnitte aufweist. Dabei ist es möglich, die beiden Teilabschnitte einstückig, beispielsweise mit einem zwischen liegenden Filmscharnier, oder als separate über ein Gelenk miteinander verbundene Bauteile auszubilden. Bevorzugt ist die mindestens eine Schwenkachse derart angeordnet, dass sie eine Bewegung eines Teilabschnitts senkrecht zur Scheibe zulässt. Die Schwenkachse verläuft also in einer Parallelebene zur Scheibe. Gemäß einer bevorzugten Ausführungsform sind zwei beabstandete Schwenkgelenke vorgesehen, wobei insbesondere beide Schwenkachsen zumindest näherungsweise parallel zur Fahrzeugscheibe ausgerichtet sind. Hierdurch wird die Montage des Führungselements wesentlich erleichtert und das Führungselement kann sich verbessert an Bewegungen des Wischblattes, insbesondere senkrecht zur Scheibe, anpassen.

In Weiterbildung ist an der Endkappe ein stangenförmiger Fortsatz vorgesehen. Dieser Fortsatz bildet den Anlagebereich zur Anlage der Führungsfläche. Dadurch, dass der Fortsatz das Wischblatt verlängert, ist gewährleistet, dass das Wischblatt mit sehr großem Abstand zum Anlenkpunkt an den Wischarm geführt wird, wodurch wiederum durch die von der Reibung zwischen Wischblatt und Scheibe verursachten Drehmomente verbessert aufgenommen werden können.

Nach der Erfindung umgreift das Führungselement den Fortsatz mit zwei beabstandeten Greifarmen. Außerdem ragt der Fortsatz in axialer Richtung durch das Führungselement hindurch und ist mit einem verdickten freien Ende versehen, um ein Herausgleiten des Führungselements in Längsrichtung zu verhindern.

Ferner sind die Greifarme gegeneinander federnd ausgebildet, so dass der Fortsatz in das Führungselement einklippsbar und damit möglichst einfach zu montieren ist.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische, ausschnittsweise Darstellung eines Scheibenwischers, bei dem der Anlagebereich der Endkappe von einem Fortsatz gebildet ist,
- Fig. 2: eine gedrehte Ansicht des Scheibenwischers gemäß Fig. 1,
- Fig. 3: eine perspektivische, ausschnittsweise Darstellung eines alternativen Scheibenwischers, bei dem der Anlagebereich der Endkappe von einer Seitenfläche gebildet ist, und
- Fig. 4: eine gedrehte Ansicht des Scheibenwischers gemäß Fig. 3.

### Ausführungsformen der Erfindung

In den Figuren sind gleiche Bauteile und Bauteile mit gleicher Funktion mit den gleichen Bezugszeichen versehen.

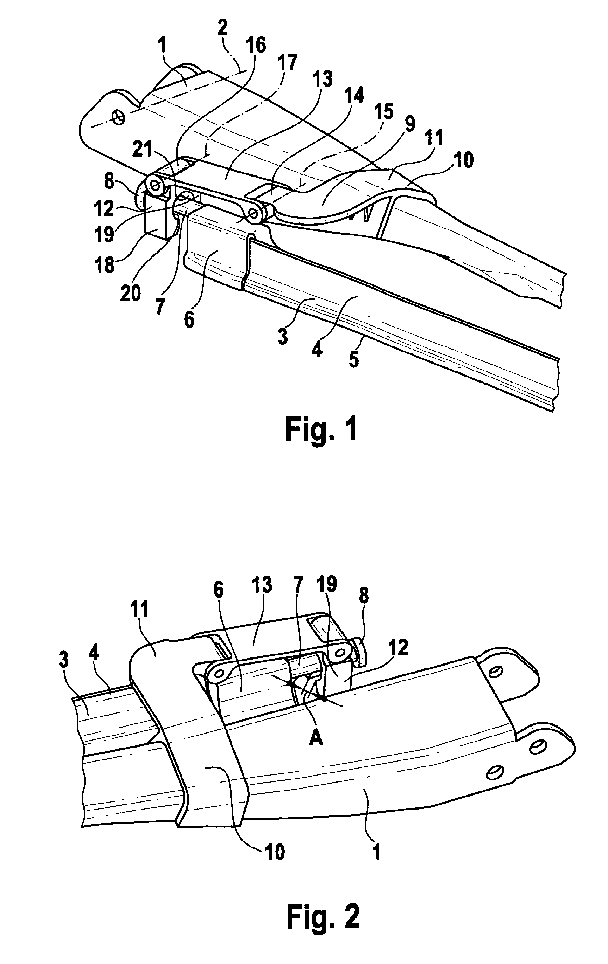

In den Fig. 1 und 2 ist ein Wischarm 1 gezeigt, der um eine Drehachse 2 verschwenkbar mit einem pendelnd angetriebenen, an der Karosserie befestigten, nicht gezeigten Bauteil befestigbar ist. Das ebenfalls nicht gezeigte freie Ende des Wischarms 1 ist gelenkig mit einem Wischblatt 3, insbesondere mit einem gelenkfreien Wischleistenträger 4 des Wischblatts 3, verbunden. Die Schwenkachse, um die das Wischblatt 3 relativ zu dem Wischarm 1 verschwenkbar ist, ist parallel zu der Drehachse 2 sowie zur Fahrzeugscheibe ausgerichtet. In Fig. 1 der DE 102 18 033 A1 ist die Anlenkung des Wischblatts 3 an dem Wischarm 1 gezeigt. Das Wischblatt 3 verläuft mit dem gezeigten Abschnitt seitlich versetzt zu dem Wischarm 1.

Der Wischleistenträger 4 umfasst eine Federschiene mit einem darauf gehaltenen Spoiler. Der Wischleistenträger 4 trägt eine Wischleiste 5. Das nicht gezeigte Gelenk zwischen Wischarm 1 und Wischblatt 3 sowie die Elastizität des Wischleistenträgers 4 ermöglichen es, dass sich die Wischleiste 5 während der Wischbewegung der Wölbung einer Windschutzscheibe anpassen kann. Dabei bewegt sich das Wischblatt 3 in einer Ebene senkrecht zur Windschutzscheibe relativ zu dem Wischarm 1, wobei die relative Hubbewegung am Ende des Wischblatts 3 besonders groß ist.

Am Ende des Wischblattes 3 ist eine den Wischleistenträger 4 umgreifende Endkappe 6 aus Kunststoff angeordnet. Diese weist einen das Wischblatt 3 in Längsrichtung verlängernden kreiszylindrischen Fortsatz 7 mit einem verdickten freien Ende 8 auf. Der Fortsatz 7 dient als Anlagebereich für ein Führungselement 9 zur seitlichen Führung des Wischblattes 3. Die Endkappe kann gemäß einer alternativen, nicht gezeigten Ausführung, auch einstückig mit dem Spoiler ausgebildet werden. Das Führungselement 9 ist mit einem U-förmigen Abschnitt 10 von oben auf das Außenprofil des Wischarms 1 aufgeklippst. In der Draufsicht besitzt das Führungselement 9 eine im Wesentlichen L-förmige Kontur, die es ermöglicht, das Führungselement 9 in axialer Richtung beabstandet von dem Fortsatz 7 mit dem Wischarm 1 zu verbinden. Das Führungselement 9 besteht aus drei gelenkig miteinander verbundenen Teilabschnitten, nämlich einem Befestigungsabschnitt 11 mit dem U-förmigen Abschnitt 10 zur Befestigung an dem Wischarm 1 sowie einem Führungsabschnitt 12, der im Wesentlichen rechtwinklig zu dem Befestigungsabschnitt 11 und einem den Befestigungsabschnitt 11 und den Führungsabschnitt 12 miteinander verbindenden Verbindungsabschnitt 13 ausgerichtet ist. Der Befestigungsabschnitt 11 ist mit dem Verbindungsabschnitt 13 über ein erstes Schwenkgelenk 14 mit einer Schwenkachse 15 und der Verbindungsabschnitt 13 ist mittels eines zweiten Schwenkgelenks 16 mit einer Schwenkachse 17 gelenkig mit dem Führungsabschnitt 12 verbunden. Beide Schwenkachsen 15, 17 verlaufen parallel zueinander und zumindest näherungsweise parallel zu der Fahrzeugscheibe sowie zu der nicht gezeigten Schwenkachse zwischen Wischarm 1 und Wischblatt 3. Mittels der Schwenkgelenke 14, 16 können sich der Verbindungsabschnitt 13 und der Führungsabschnitt 12 bei einer Wischbewegung zusammen mit dem Wischblatt 3 senkrecht zur Scheibe bewegen. Hierdurch wird eine Kollision des Führungselementes 9 mit der Scheibe vermieden.

Der Führungsabschnitt 12 weist zwei gegenüberliegende federelastische Arme 18, 19 auf, zwischen denen eine Ausnehmung 20 zur Aufnahme des Fortsatzes 7 gebildet ist. Die Ausnehmung 20 weist einen kreisrundem Querschnitt auf und ist im Wesentlichen koaxial zum Fortsatz 7 angeordnet. Der Fortsatz 7 ist mit Radialspiel in der Ausnehmung 20 angeordnet. An ihren freien Enden weisen die Arme 18, 19 einen Abstand A zueinander auf, der im gezeigten, montierten Zustand kleiner ist als der Durchmesser des Fortsatzes 7. Bei der Montage wird der Fortsatz durch diesen Abstand zwischen den beiden Armen 18, 19 hindurch in die Ausnehmung gedrückt, wobei hierbei die Arme 18, 19 federnd auseinanderschwenken und danach wieder in die gezeigte Position zurückschwenken. Durch diesen Einklippsmechanismus kann das Wischblatt 3 besonders einfach montiert und gehalten werden. Der Durchmesser des verdickten Endes 8 des Fortsatzes 7 ist größer als der Durchmesser der Ausnehmung 20, so dass ein Herausgleiten des Fortsatzes 7 aus der Ausnehmung 20 in Längsrichtung vermieden wird. Durch die Aufnahme des Fortsatzes 7 in der Ausnehmung 20 wird zusätzlich zu einer seitlichen Führung des Wischblattes eine Führung in senkrechter Richtung hierzu, also in Richtung Fahrzeugscheibe gewährleistet.

Bei Bedarf kann zwischen den an der Innenseite der Arme 18, 19 ausgebildeten Führungsfläche 21 und dem Fortsatz 7 eine Dämpfungsschicht, insbesondere eine Elastomerschicht, vorgesehen werden.

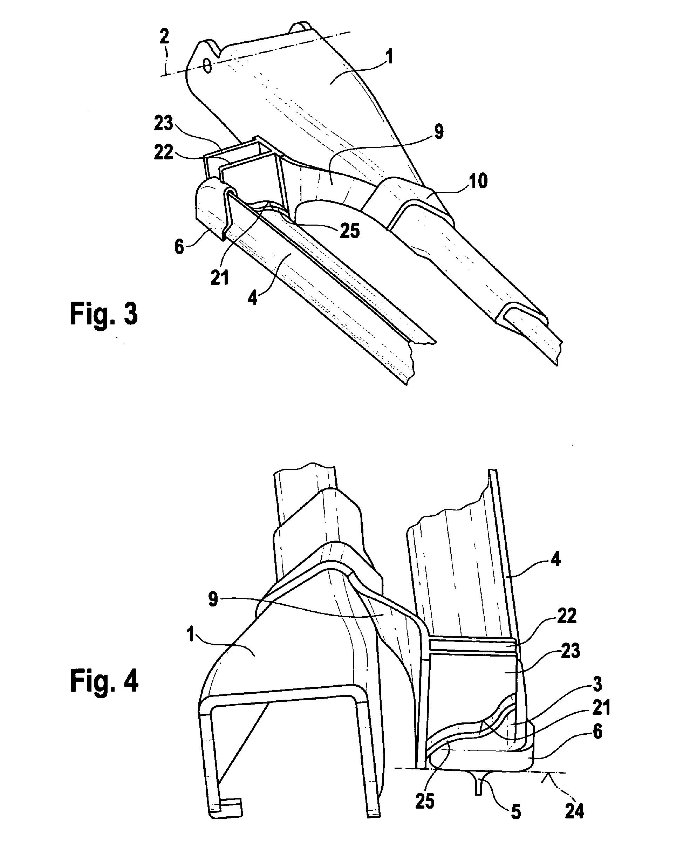

In den Fig. 3 und 4 ist ein alternativer Scheibenwischer mit einem Wischarm 1 und einem abschnittsweise seitlich neben dem Wischarm 1 verlaufenden Wischblatt 3 mit einem als Spoiler ausgebildeten Wischleistenträger 4 und einer Wischleiste 5 gezeigt. Zwischen dem seitlich von dem Wischarm 1 beabstandeten Abschnitt des Wischblatts 3 und dem Wischarm 1 ist ein Führungselement 9 angeordnet. Dieses ist mittels eines U-förmigen Abschnitts 10 auf den Wischarm 1 von außen aufgeklippst. Im Gegensatz zu dem in den Fig. 1 und 2 gezeigten Ausführungsbeispiel ist das Führungselement 9 einstückig ausgebildet.

Das einstückige Führungselement 9 aus Kunststoff ist derart gebogen ausgebildet, dass es in Richtung Wischarm 1 eine federnde Bewegung ausführen kann. Diese federnde Bewegung hat aufgrund der schrägen Anordnung bzw. Ausbildung des Führungselementes 9 auch eine Bewegungskomponente senkrecht zur Scheibe.

An dem Führungselement 9 sind zwei quer zu seiner Längserstreckung verlaufende Rippen 22, 23 vorgesehen, die im Wesentlichen senkrecht zur Fahrzeugscheibe und in Längsrichtung des Wischarms zueinander beabstandet angeordnet sind. Die an den Rippen 22, 23 ausgebildeten Führungsflächen 21 zur Führung des Wischblattes 3 sind nicht eben, sondern gekrümmt ausgebildet. Sie ermöglichen nicht nur eine seitliche Führung des Wischblattes 3, sondern auch eine Führung senkrecht zur Fahrzeugscheibe, zu der die Grundfläche 24 des Wischblattes 3 parallel verläuft.

Die Führungsflächen 21 verlaufen unter einem Winkel zu der Grundfläche 24 des Wischblattes 3.

Zwischen den beiden parallel zueinander angeordneten Rippen 22, 23 und dem von der Endkappe 6 gebildeten Anlagebereich für die Führungsflächen 21 ist eine Dämpfungsschicht 25 vorgesehen, mittels derer Stöße abgefangen und Schwingungen gedämpft werden können.

## Patentansprüche

1. Scheibenwischer für Kraftfahrzeuge mit einem Wischarm (1) und einem daran um eine Schwenkachse schwenkbar befestigten, abschnittsweise seitlich neben dem Wischarm (1) verlaufenden Wischblatt (3) mit einem Wischleistenträger (4) und einer Wischleiste (5), wobei zwischen dem seitlich neben dem Wischarm (1) verlaufenden Abschnitt des Wischblatts (3) und dem Wischarm (1) ein Führungselement (9) vorgesehen ist, wobei das Führungselement (9) mindestens eine Führungsfläche (21) zur Anlage an dem Wischblatt (3) aufweist und wobei an mindestens einem Endbereich des Wischblattes (3) ein Anlagebereich zur Anlage der Führungsfläche (21) des Führungselementes (9) vorgesehen ist, wobei
der Anlagebereich von einem endseitig am Wischblatt (3) angeordneten, in Längsrichtung des Wischblattes (3) verlaufenden stangenförmigen Fortsatz (7) gebildet ist, **dadurch gekennzeichnet, dass** das Führungselement (9) den Fortsatz (7) über einen Umfangsabschnitt umgreifend ausgebildet ist und eine zwischen zwei gegenüberliegenden federelastischen Armen (18, 19) liegende Ausnehmung (20) als Aufnahme für den Fortsatz (7) aufweist und dass der Fortsatz (7) in die im Führungselement (9) vorgesehene Aufnahme einklippsbar ist und ein verdicktes freies Ende (8) aufweist, dessen Durchmesser größer ist als der Durchmesser der Aufnahme.

2. Scheibenwischer nach Anspruch 1,
**dadurch gekennzeichnet,**
**dass** der Fortsatz (7) an eine zum Wischblatt (3) vorgesehene Endkappe (6) angeformt ist.

3. Scheibenwischer nach Anspruch 1 oder 2,
**dadurch gekennzeichnet,**
**dass** das Führungselement (9) den Fortsatz (7) mit Radialspiel über einen Umfangsabschnitt umgreifend ausgebildet ist.

## Claims

1. Windscreen wiper for motor vehicles, with a wiper arm (1) and a wiper blade (3) which is fastened thereto in a manner pivotable about a pivot axis, runs in sections laterally next to the wiper arm (1) and has a wiper strip carrier (4) and a wiper strip (5), wherein a guide element (9) is provided between that section of the wiper blade (3) which runs laterally next to the wiper arm (1) and the wiper arm (1), wherein the guide element (9) has at least one guide surface (21) for contact with the wiper blade (3), and wherein a contact region for contact of the guide surface (21) of the guide element (9) is provided on at least one end region of the wiper blade (3), wherein the contact region is formed by a rod-shaped extension (7) which is arranged on the end side of the wiper blade (3) and runs in the longitudinal direction of the wiper blade (3), **characterized in that** the guide element (9) is designed so as to engage around the extension (7) over a circumferential section and has a recess (20), which is located between two opposite spring-elastic arms (18, 19), as a receptacle for the extension (7), and **in that** the extension (7) can be clipped into the receptacle provided in the guide element (9) and has a thickened free end (8), the diameter of which is larger than the diameter of the receptacle.

2. Windscreen wiper according to Claim 1, **characterized in that** the extension (7) is integrally formed on an end cap (6) provided for the wiper blade (3).

3. Windscreen wiper according to Claim 1 or 2, **characterized in that** the guide element (9) is designed so as to engage around the extension (7) over a circumferential section with radial play.

## Revendications

1. Essuie-glace pour véhicules automobiles comprenant un bras d'essuie-glace (1) et un balai d'essuie-glace (3) fixé à celui-ci de manière à pouvoir pivoter autour d'un axe de pivotement et s'étendant en partie latéralement à côté du bras d'essuie-glace (1), avec un support de raclette d'essuie-glace (4) et une raclette d'essuie-glace (5), un élément de guidage (9) étant prévu entre la portion du balai d'essuie-glace (3) s'étendant latéralement à côté du bras d'essuie-glace (1) et le bras d'essuie-glace (1), l'élément de guidage (9) présentant au moins une surface de guidage (21) pour l'application contre le balai d'essuie-glace (3) et une région d'application pour l'application de la surface de guidage (21) de l'élément de guidage (9) étant prévue sur au moins une région d'extrémité du balai d'essuie-glace (3),
la région d'application étant formée par une saillie (7) en forme de barre disposée du côté de l'extrémité sur le balai d'essuie-glace (3) et s'étendant dans la direction longitudinale du balai d'essuie-glace (3),
**caractérisé en ce que** l'élément de guidage (9) est réalisé de manière à venir en prise autour de la saillie (7) sur une portion périphérique, et présente un évidement (20) situé entre deux bras élastiques à ressort opposés (18, 19) en tant que logement pour la saillie (7), et **en ce que** la saillie (7) peut être enclipsée dans le logement prévu dans l'élément de guidage (9), et présente une extrémité libre épaissie (8) dont le diamètre est supérieur au diamètre de l'évidement.

2. Essuie-glace selon la revendication 1,
**caractérisé en ce que**
la saillie (7) est façonnée sur un capuchon d'extrémité (6) prévu sur le balai d'essuie-glace (3).

3. Essuie-glace selon la revendication 1 ou 2,
**caractérisé en ce que**
l'élément de guidage (9) est réalisé de manière à venir en prise autour de la saillie (7) avec un jeu radial sur une portion périphérique.
